(19) **Europäisches Patentamt**
**European Patent Office**
**Office européen des brevets**

(11) Veröffentlichungsnummer : **0 514 897 A2**

(12) # EUROPÄISCHE PATENTANMELDUNG

(21) Anmeldenummer : **92108601.3**

(22) Anmeldetag : **21.05.92**

(51) Int. Cl.⁵ : **B09B 3/00**, A62D 3/00

(30) Priorität : **22.05.91 DE 4116583**

(43) Veröffentlichungstag der Anmeldung :
**25.11.92 Patentblatt 92/48**

(84) Benannte Vertragsstaaten :
**AT BE CH DE DK ES FR GB IT LI LU NL SE**

(71) Anmelder : **BIOTECON, Gesellschaft für**
**Biotechnologische Entwicklung und**
**Consulting GmbH**
**Gustav-Meyer-Allee 25**
**W-1000 Berlin 65 (DE)**

(72) Erfinder : **Buchholz, Rainer, Prof. Dr.**
**Falkenweg 8**
**O-1550 Nauen (DE)**

(74) Vertreter : **Fitzner, Ulrich, Dr.**
**Am Eichförstchen 2a**
**W-4030 Ratingen-Lintorf (DE)**

(54) **Vorrichtung und Verfahren zur Dekontaminierung von Erdreich.**

(57)   Die vorliegende Erfindung betrifft eine Vorrichtung zu Dekontaminierung von Erdreich
mittels Mikroorganismen, welche durch einen
rohrförmigen, um seine Rohrachse drehbaren
Reaktionsraum gekennzeichnet ist(4), dessen
Innenwand (5) wendelförmig ausgestaltet und
dessen Neigungswinkel so variierbar ist, daß
sich eine von der Förderschnecke (2) bis zur
Öffnung (3) ansteigende, abfallende oder horizontale Reaktionsstrecke ergibt. Das Reaktionsgut wird in den Wendelgängen durch den
Reaktor derart bewegt, daß eine Rückvermischung nicht stattfinden kann. Durch die Drehbewegung wird jedoch eine Vermischung des
Bodens im Wendelzwischenraum ermöglicht.

Fig.1

Fig.2/4

EP 0 514 897 A2

Die vorliegende Erfindung betrifft eine neuartige Vorrichtung und Verfahren zur Dekontaminierung von Erdreich.

Aus der DE-OS 39 10 550 ist ein Verfahren zur biologischen Reinigung von kontaminierten Feststoffmassen bekannt. Hierbei wird das Rektionsgut in einem Reaktionsraum in einer vorgewählten Schichthöhe ausgebreitet. Während der mikrobiellen Abbaureaktion muß das Rektionsgut in vorgewählten Abständen aufgelockert und gewendet werden. Im Bedarfsfall werden auch Bakterien noch nachträglich zugegeben. Nachteilig bei diesem Verfahren ist, daß während des Abbauprozesses es zu keiner kontinuierlichen Bewegung des zu behandelnden Erdreiches mehr kommt,d.h., Nährstoffversorgung und Luftzufuhr sind über den gesamten Reaktionsraum nicht gleichmäßig verteilt. Demgemäß kommt es zu einem ungleichmäßigen Abbauprozeß. Abgesehen davon eignet sich das Verfahren nicht für eine kontinuierliche Prozeßführung, da die eigentliche Reaktion stets nur im Batch-Verfahren durchgeführt werden kann.

Aus der DE-PS 38 37 865 ist ein Verfahren zur biologischen Umwandlung organischer Stoffe in Biomasse bekannt. An der Innen seite des trommelförmigen Gehäuseteils sind in umfänglichem und axialem Abstand voneinander schaufelartige Elemente vorgesehen. Nachteilig bei dieser Konstruktion ist, daß ein gleichmäßiger Transport des Reaktionsgutes durch die schaufelartigen Förderelemente an der Innenwand der Trommel vom Eingang bis zum Ausgang des Rektors nicht gewährleistet ist denn durch eine Anordnung von Schaufeln an der Innenwand läßt sich lediglich ein Mischeffekt erreichen. Eine Transportwirkung kann nur dann bewirkt werden, wenn die Rektionsstrecke abfallend gestaltet ist. Bei horizontaler oder ansteigender Rektionsstrecke findet mit den Schaufeln kein Weitertransport vom Eingang zum Ausgang statt.

Aus der DE-PS 39 21 066 ist schließlich ein Verfahren zur Bodendekontaminierung mittels Mikroorganismen bekannt, bei dem das mit Mikroorganismen versetzte Erdreich in einen Reaktor eingebracht wird, welcher als Mischeinrichtung eine langsam drehende Schnecke enthält. Nachteilig bei einer solchen Anlage ist wiederum, daß eine ausreichende Berührung der Partikel mit dem zugesetzten Sauerstoff nicht gewährleistet ist. Denn durch die Schnecke findet zwar eine Durchmischung und Homogenisierung des Erdreiches statt, aber die einzelnen Partikel werden in dem Luftraum des Reaktors nicht so gleichmäßig verteilt, daß ein ausreichender Kontakt mit Sauerstoff entsteht, welcher eine optimale Reaktionsarbeit der Mikroorganismen gewährleistet.

Die vorliegende Erfindung hat sich nunmehr die Aufgabe gestellt, eine Vorrichtung zur Dekontaminierung von Erdreich mittels Mikroorganismen bestehend aus einem rohrförmigen um seine Rohrachse drehbaren Reaktionsraum, dessen Neigungswinkel so variierbar ist, daß sich eine ansteigende, abfallende oder horizontale Reaktionsstrecke ergibt, zur Verfügung zu stellen, welche die vorgenannten Nachteile nicht mehr aufweist.

Diese Aufgabe wird demgemäß dadurch gelöst, daß an der Innenwand des Reaktionsraums Wendeln derart angeordnet sind, daß eine Innenwendel entsteht, in welcher sich bei der Drehung des Reaktionsraums um dessen Achse das Rektionsgut in Richtung Ausgangsöffnung bewegt. Bei dem Einsaz der erfindungsgemäßen Vorrichtung wird im Prinzip kontaminiertes Erdreich durch einen Einfülltrichter in die Förderschnecke verbracht. Diese Förderschnecke befindet sich ihrerseits erfindungsgemäß in einem Rohr, durch welches ein nahezu luftdichter Transport des Erdreiches zu dem Reaktionsraum gewährleistet ist. E benso kommen für die Zufuhr des Gutes andere übliche Vorrichtungen in Betracht, z.B. Zellenradschleuse, durch die ein vollständig luftdichter transport in den Innenraum möglich wird, Bandförderer, Backenbrecher.

Der Reaktionsraum ist erfindungsgemäß mit Vorrichtungen zur Be- und Entlüftung versehen. Damit dieser um seine Rohrachse während des mikrobiologischen Prozesse gedreht werden kann, ist eine Antriebsvorrichtung vorgesehen. Gewöhnlich wird dies an geeigneter Stelle außerhalb des Rektionsraumes angebracht.

Neben den Vorrichtungen für die Zugabe von Luft oder anderen Gasen sind auch solche für den Zusatz von Mikroorganismen. Enzymen, Enzymextrakten, Nährstoffen, Säuren, Laugen und dergleichen vorgesehen. Erfindungsgemäß wird bevorzugt, ein Rohrsystem, welches sich nicht drehbar über ein Lager auf der Förderschneckenachse abstützt, in dem Rektor anzuordnen. Dieses Rohrsystem besteht aus zwei, drei oder mehr voneinander getrennten Rohren. Selbstverständlich kann im Bedarfsfall auch nur ein Rohr vorgesehen werden. Das System ist so konstruiert, daß das in dem Rektor transportierte Erdreich mit der jeweils benötigten Menge an Mikroorganismen, Enzymen, Enzymextrakten Nährsalzen, Säuren. Laugen und Wasser sowie Luftsauerstoff sowie anderen Gasen, die insbesondere für anaerobe Betriebsweise geeignet sind,unabhängig voneinander versorgt werden kann.

In dem Reaktionsraum wird durch dessen Drehen um seine Rohrachse das Erdreich gleichmäßig mit Luft, oder anderen Gasen, Mikroorganismen, Enzymen, Enzymextrakten, Nährsalzen, Säuren, Laugen, Wasser und dergleichen vermischt.

Im Prinzip handelt es sich bei dem Reaktionsraum um einen Drehrohrförderer mit außen liegender Wendel, d.h. ein Rohr dessen innere Wand mit spiralförmig angeordneten Blechen versehen ist und das von außen angetrieben wird.

Als Material für die Wendeln kommen jedoch auch andere geeignete Stoffe in Betracht, z.B. kunststoffe aller Art.

Bei der Drehung des Rohres wird das Fördergut in den Wendelgängen kontinuierlich vorwärtsbewegt. Das Verhalten des Reaktionsgutes entspricht da bei einer Strömungscharakteristik. Die Wendelgänge markieren gewissermaßen eine Rektionsstrecke, die an der Innenwand des Rektors verläuft und demzufolge gegenüber der durch die Rohrlänge des Rektors gegebenen Reaktionsstrecke erheblich verlängert ist. Durch Einbau von Schikanen rechtwinklig oder geneigt zu den Wendeln läßt sich die Mischleistung erhöhen.

Durch die Ausgestaltung des Reaktionsraums als Drehrohrförderer entsteht die Möglichkeit, das Drehrohr mit verschiedenen konstanten Umfangsgeschwindigkeiten und Neigungen des Rohres sowie Ganghöhen zu betreiben und somit verschiedene auf die kontamination und die Bodenbeschaffenheit abgestimmte Verweilzeit des Erdreiches im Rohr und damit Abbauzeiten einzustellen.

Der Reaktionsraum kann erfindungsgemäß horizontal oder annähernd horizontal eingestellt werden. Bevorzugt wird jedoch eine leicht vom Eingang zum Ausgang des Rektors ansteigende Rektionsstrecke. Hierbei kann der Neigungswinkel je nach Bedarf eingestellt werden. Je steiler der Anstieg der Rektionsstrecke vom Eingang bis zum Ausgang des Rektionsraumes ist, desto länger ist die Verweilzeit, d.h., bei stark kontaminiertem Erdreich läßt sich durch eine Erhöhung des Neigungswinkels die Intensität der Reinigung steigern.

Nach dem Gesagten zeichnet sich die erfindungsgemäße Vorrichtung durch die außenliegende Wendel und die Verstellbarkeit des Neigungswinkels des Drehrrohrförderers aus. Durch die spezielle Kombination dieser beiden Merkmale gelingt es im Gegensatz zum bisherigen Stand der Technik überraschend, die benötigte Verweilzeit im Rektionsraum genau einzustellen. Insbesondere beim kontinuierlichen Prozeßablauf kann somit fortlaufend die Verweilzeit geregelt werden.

Aus dem Gesagten wird deutlich, daß die erfindungsgemäße Vorrichtung sich für kontinuierliche Verfahrensweise eignet, was bisher aus dem Stand der Technik nicht bekannt war.

Ein entscheidender Vorteil der erfindungsgemäßen Konstruktion ist, daß eine Rückvermischung ausgeschlossen ist. Denn durch die Wendel an der Innenwand des Reaktionsraums wird das Reaktionsgut ständig weitertransportiert. Während des Transportes durch den Rektor wird das Erdreich im abgegrenzten Raum fortlaufend vermischt. Ggfs. kann der Mischeffekt durch Schikanen verstärkt werden, welche rechtwinklig oder geneigt zu den außen liegenden Wendeln angeordnet sind. Im Idealfall befindet sich in jedem Wendelzwischenraum ein homogen verteiltes Gemisch, welches sich, bezogen auf diese Wendel, eigentlich nicht verändert. Es handelt sich also um eine kontinuierlich betriebene Mischbeckenkaskade. Aus diesem Grunde ist der Abbau in jedem Wendelzwischenraum gleichmäßig. Die Xenobiotika-Konzentration am Rohrende erreicht nach Einstellen eines Gleichgewichtes in Reaktionsraum einen zeitlich konstanten, d.h. reproduzierbaren Wert. Um optimale Abbaubedingungen zu schaffen, kann die Endkonzentration als Funktion der Verweilzeit im Reaktor eingestellt werden. Diese Verweilzeit ist, wie bereits oben erwähnt, wiederum abhängig von der Drehzahl und der Neigung des Rohres sowie der Ganghöhe.

Ein weiterer Aspekt der erfindungsgemäßen Vorrichtung ist, daß im Rektionsraum ständig neue Grenzflächen zwischen den Phasen herausgebildet werden. Dies ergibt die optimalen Voraussetzungen für die Diffusion des Sauerstoffes in das Füllgut. Auch hat sich gezeigt, daß bei den meisten anderen Verfahren zur Dekontaminierung die Abbauprozesse durch Sauerstofflimitierung wesentlich verlangsamt werden. Die Gefahr beim Begasen ist, daß leichtflüchtige Verbindungen in die Gasphase und damit in die Abluft übertreten. Demgemäß ist in einem solchen Falle die Luftmenge zu regulieren bzw. eine Abgasreinigung vorzunehmen. Dies läßt sich bei der erfindungsgemäßen Vorrichtung ohne Probleme lösen.

Die Einstellung des Feuchtigkeitsgehaltes, des Nährstoffgehaltes und des pH-Werts sowie der Sauerstoffversorgung bzw. Versorgung mit anderen Gasen, die insbesondere für anaerobe Arbeitsweise geeignet sind, werden erfindungsgemäß durch ein Rohrsystem erreicht, welches nicht drehbar auf der Achse der Förderschnecke sich abstützt. Vorzugsweise handelt es sich hierbei um drei oder mehr Rohre. In diesen werden Suspension und Nährsalze transportiert und am Anfang der Reaktionsstrecke des Reaktionsraumes auf das Erdreich gesprüht. Die Zusammensetzung ist den jeweiligen Erfordernissen anzupassen. Ggf. können auch speziell gezüchtete Mikroorganismenkulturen, Enzyme, Enzymextrakte zugesetzt werden.

Durch die zentrale Rohranordnung ist es erfindungsgemäß im Gegensatz zum Stand der Technik möglich, Biomasse, Enzyme, Enzymextrakte kontinuierlich zuzuführen. Insbesondere können mit Hilfe kürzerer Rohre Biomasse, Enzyme, Enzymextrakte zusätzlich in den Reaktionsraum eingebracht werden. D. h., durch entsprechende Anordnung des Rohrausgangs kann erreicht werden, daß nach Durchlaufen des ersten Teils der Rektionsstrecke durch Zusatz frischer Biomasse, Enzyme, Enzymextrakte die Abbauleistung erhöht wird. Auch ist es möglich, gezielt Mikroorganismen, Enzyme, Enzymextrakte für die noch nicht abgebauten Substanzen zuzusetzen.

Durch die zentrale Rohranordnung ist es darüberhinaus möglich, die Wasserzufuhr auf einem definierten Niveau konstant zu halten Insbesondere können Schwankungen des Wassergehalts in der Reaktionsstrecke ausgeglichen werden.

Gleiches gilt für die Luft- bzw. Gaszufuhr. Alle bekannten aeroben Verfahren setzen Luft im Überschuß ein. Erfindungsgemäß wird hingegen entsprechend der am Ende des Reaktionsraums gemessenen Luftzusammensetzung die Luftzugabe geregelt und so über den gesamten Rektionsraum verteilt eine optimale Sauerstoffversorgung der Mikroorganismen gewährleistet. Auf diese Weise läßt sich demzufolge die oben beschriebene Ausgasung minimieren, so daß eine Abgasreinigung ganz vermieden oder reduziert werden kann. Das gleiche gilt für eine anaerobe Verfahrensweise, bei der statt Luft bzw. Sauerstoff mit anderen Gasen begast wird.

Die Mikroorganismen benötigen für ihre Rektion eine bestimmte Feuchtigkeit. Erfindungsgemäß kann in einem Bereich von 5-80 % Feuchtigkeitsgehalt gearbeitet werden. Bevorzugt werden jedoch 5-45 %, ganz besonders 5-20 %. Der Feuchtigkeitsgehalt kann hierbei entweder durch den Zusatz zuvor angefeuchteter Luft oder direkt durch Wasser oder Nährmediumzusatz erreicht werden.

Im folgenden wird die Erfindung unter Bezugnahme auf die Figuren näher beschrieben, in welchen die erfindungsgemäße Anlage in der Seitenansicht dargestellt ist.

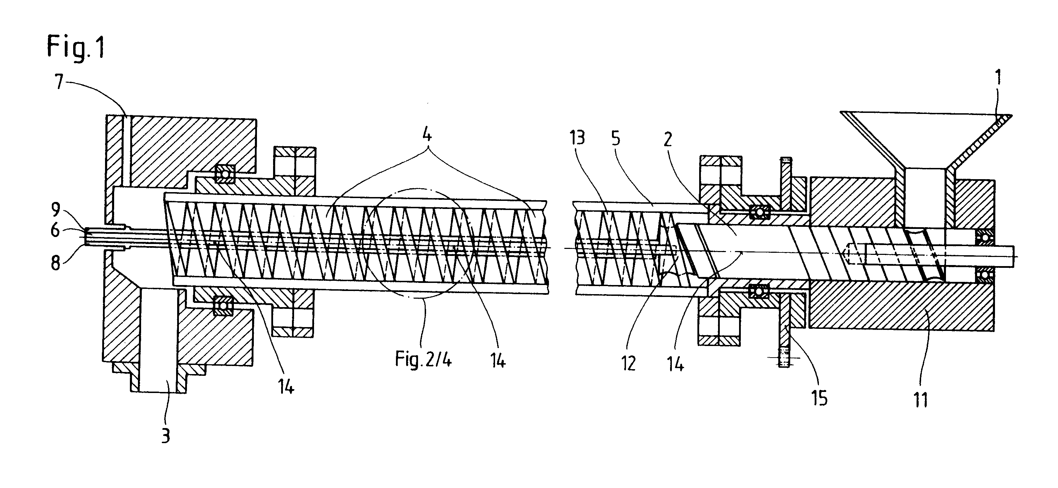

Figur 1 zeigt die erfindungsgemäße Anlage insgesamt in der Seitenansicht,

Figur 2 zeigt einen Ausschnitt des erfindungsgemäßen Rektionsraums,

Figur 3 stellt den Rektionsraum im querschnitt dar,

Figur 4 stellt den Reaktionsraum mit verkürztem Zulaufrohr für die Mikroorganismen dar.

Über den Einfülltrichter 1 wird Erdreich der Anlage zugeführt. Unterhalb des Einfülltrichters 1 zweigt in horizontaler Richtung ein rohrförmiges Gehäuse 11 ab, in welchem sich die Förderschnecke 2 befindet. Mittels dieser Förderschnecke 2 wird das zu behandelnde Erdreich in Richtung des Rektionsraumes 4 bewegt.

Während dieser Phase findet keine Zufuhr von Luft oder anderen Gasen, Nährsalzen, Mikroorganismen, Enzymen oder Enzymextrakten oder dergleichen statt. Es handelt sich somit um eine reine Transportstrecke, in welcher keine Rektion stattfindet. Die Förderschnecke 2 dient ausschließlich der gleichmäßigen Zuführung von Erdreich in den Reaktionsraum 4. Ebenso kommen für die Zufuhr des Gutes andere übliche Vorrichtungen in Betracht, z. B. Zellradschleuse, Bandförderer, Backenbrecher.

In dem Reaktionsraum 4 kommt es zu dem eigentlichen Abbauprozeß. Hierzu werden über das Rohr 9 über dessen Ende 12 Mikroorganismen, Enzyme, Enzymextrakte dem Reaktionsraum 4 zugeführt. Die Art der Mikroorganismen und deren Zusammensetzung in Form einer Mischkultur bzw. des jeweiligen Enzymgemischs hängt von den jeweiligen Abbaubedingungen bzw. von dem abzubauenden Material ab. Über die Rohre 6,8, 9 werden zudem Nährstoffe, Luft oder andere Gase sowie Säuren und Laugen zur pH-Wertregulierung dem Reaktor zugeführt. Mit Hilfe des verkürzten Rohres 10 kann erreicht werden, daß nach Durchlaufen des ersten Teils der Reak ionsstrecke frische Mikroorganismen oder Enzyme zugesetzt werden. Das Ende 16 des Rohres 10 wird in Abhängigkeit von der Abbaugeschwindigkeit in den Rektionsraum 4 angeordnet.

Der pH-Wert in dem Reaktor wird erfindungsgemäff vorzugsweise im Bereich von 3-10 gehalten. Der Wassergehalt bewegt sich im Bereich von 5-80 %. Bevorzugt werden jedoch erfindungsgemäß Bereiche von unter 45 %, insbesondere von 5-45 % und ganz besonders von 5-20 %.

Der Reaktionsraum ist an der Innenseite seiner Wand 5 mit spiralförmig angeordneten Blechen 13 versehen. Hierdurch entsteht eine Innenwendel, in welcher sich bei der Drehung des Reaktionsraums um die Achse 14 das Reaktionsgut in Richtung Öffnung 3 bewegt. Die Drehung des Reaktionsraums 4 wird durch die Antriebsvorrichtung 15 bewirkt. Der Böschungswinkel, die Wendelsteigung, die Umfangsgeschwindigkeit des Reaktionsraums sowie der eingestellte Neigungswinkel sind entscheidend für das Ergebnis des Abbauprozesses. Denn durch eine Variation dieser Parameter lassen sich entscheidend die Verweilzeiten ändern.

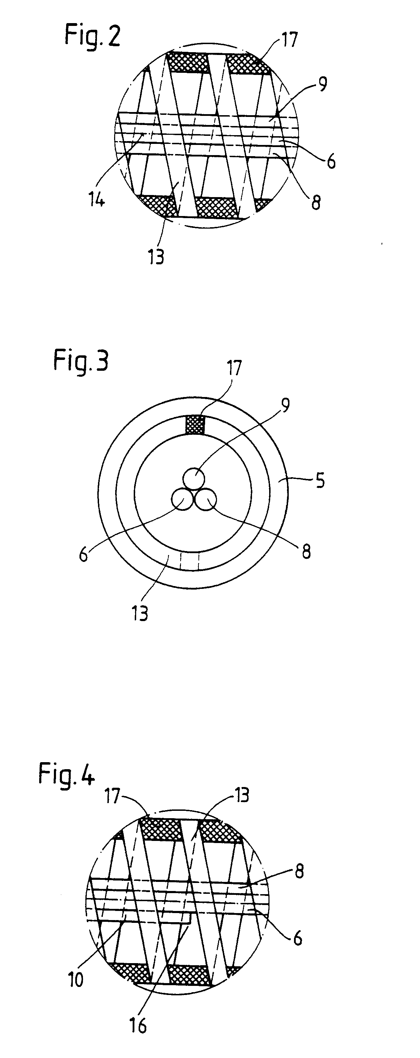

In den Figuren 2 und 3 sind zwecks Erhöhung des Mischeffekts zusätzlich die Schikanen 17 rechtwinklig zu den Wendeln 13 und parallel zur Reaktorwand 5 angeordnet.

Neben der Austragsöffnung 3 ist am Ende der Reaktionsstrecke des Reaktionsraumes 4 eine Gasaustrittsöffnung 7 angebracht. Hier kann im Bedarfsfalle eine Abgasreinigung vorgesehen sein. Beispielsweise können vom Gasstrom mitgerissene xenobiotische Stoffe durch auf an Aktivkohle immobilisierte Mikroorganismen aufgefangen und mikrobiell abgebaut werden. Durch eine gleichzeitige Analyse des Abgases kann einerseits der Schadstoffgehalt und andererseits auch dessen Sauerstoffgehalt kontrolliert werden. Aufgrund der Analysenergebnisse läßt sich der Sauerstoff- bzw. Gasgehalt minimieren, um möglichst wenig Abgas zu erzeugen. Ebenso kann der Feuchtigkeitsgehalt in einem optimalen Bereich gehalten werden.

## Patentansprüche

1. Vorrichtung zur Dekontaminierung von Erdreich mittels Mikroorganismen bestehend aus einem rohrförmigen um seine Rohrachse (14) drehbaren Reaktionsraum (4), dessen Neigungswinkel so variierbar ist, daß sich eine ansteigende, abfallende oder horizontale Reaktionsstrecke ergibt, **dadurch gekennzeichnet, daß** an der Innenwand (5) des Reaktionsraums (4) Wendeln derart angeordnet sind, daß eine Innenwendel entsteht, in welcher sich bei der Drehung des Reaktionsraums (4) um dessen Achse (14) das Reaktionsgut in Richtung Öffnung (3) bewegt.

2. Vorrichtung nach Anspruch 1, **dadurch gekennzeichnet, daß** rechtwinklig zu den Wendeln (13) Schikanen (17) im Reaktionsraum (4) angeordnet sind.

3. Vorrichtung nach einem der Ansprüche 1 oder 2, **dadurch gekennzeichnet, daß** der Reaktionsraum (4) mit Vorrichtungen zur Be- (6) und Entlüftung (7) versehen ist.

4. Vorrichtung nach einem der Ansprüche 1 bis 3, **dadurch gekennzeichnet, daß** sie mit einer Antriebsvorrichtung (15) für die Drehung des Reaktions raumes (4) versehen ist.

5. Vorrichtung nach einem der Ansprüche 1 bis 4, **dadurch gekennzeichnet, daß** an dem Reaktionsraum (4) Vorrichtungen (8) für die Zugabe von Mikroorganismen angeordnet sind.

6. Vorrichtung nach einem der Ansprüche 1 bis 5, **dadurch gekennzeichnet, daß** an dem Reaktionsraum (4) Vorrichtungen für die Zufuhr von Nährstoffen angeordnet sind.

7. Vorrichtung nach einem der Ansprüche 1 bis 6, **dadurch gekennzeichnet, daß** sie mit einem Einfülltrichter (1) mit nachgeordneter Förderschnecke (2) für die Zufuhr des Erdreichs versehen ist.

8. Vorrichtung nach einem der Ansprüche 1 bis 7, **dadurch gekennzeichnet, daß** auf der Achse (14) der Förderschnecke (2) in axialer Richtung durch den Reaktionsraum (4) sich erstreckende Rohre ( 6,8,9 ) angeordnet sind, durch welche Luft, Mikroorganismen, Säuren/ Laugen, Nährsalze und dergleichen dem Reaktionsraum (4) zuführbar sind.

9. Vorrichtung nach Anspruch 8, **dadurch gekennzeichnet, daß** die Rohre (6,8,9) nicht drehbar gelagert sind.

10. Verfahren zur Dekontamination von Erdreich mittels Mikroorganismen in einer Vorrichtung gemäß einem der Ansprüche 1 bis 9, **dadurch gekennzeichnet, daß** Kontaminiertes Erdreich
   a) in den Einfülltrichter (1) gegeben
   b) durch die Förderschnecke (2) zum Reaktionsraum (4) transportiert,

   c) durch Drehen des Reaktionsraumes (4) um seine Rohrachse in Richtung Öffnung (3) bewegt sowie mit Luft, Nährsalzen, Säuren/Laugen zur pH-Wertsregelung, Wasser und Mikroorganismen gemischt und
   d) gereinigtes Erdreich durch die Öffnung (3) entnommen wird.

11. Verfahren nach Anspruch 10, **dadurch gekennzeichnet, daß** ein pH-Wert von 3-10 eingestellt wird.

12. Verfahren nach einem der Ansprüche 10 oder 11, **dadurch gekennzeichnet, daß** eine konstante Drehgeschwindigkeit des Reaktionsraumes (4) eingestellt wird , die der benötigten Verweilzeit des Reaktionsguts entspricht.

13. Verfahren nach einem der Ansprüche 10 bis 12, **dadurch gekennzeichnet, daß** imReaktionsraum (4) ein Wassergehalt von 5-80 % eingestellt wird.

14. Verfahren nach Anspruch 13, **dadurch gekennzeichnet, daß** ein Wassergehalt von 5-45 % eingestellt wird.

15. Verfahren nach Anspruch 14, **dadurch gekennzeichnet, daß** ein Wassergehalt von 5-20 % eingestellt wird.

Fig.1

Fig.2/4

Fig. 2

Fig. 3

Fig. 4